# EUROPEAN PATENT APPLICATION

(11) **EP 3 482 812 A1**
(43) Date of publication of application: **15.05.2019**
(21) Application number: 17825359.7
(22) Date of filing: 27.09.2017
(51) Int. Cl.: B01D 45/16, B01D 53/18

(54) **DEDUSTING AND DEMISTING DEVICE AND ABSORPTION TOWER**

(71) Applicant: BEIJING ZHONGNENG NUOTAI ENERGY SAVING AND ENVIRONMENTAL PROTECTION CO., LTD., Beijing 100160 (CN)
(72) Inventor: WU, Zhengmin, Beijing 100160 (CN); ZHAO, Yuncai, Beijing 100160 (CN); WANG, Liang, Beijing 100160 (CN); WU, Minglai, Beijing 100160 (CN)
(74) Representative: Kraus & Weisert Patentanwälte PartGmbB
(86) International application number: PCT/CN2017/103749
(87) International publication number: WO 2019/061097

(57) **Abstract**

Embodiments of the present application, pertaining to the technical field of flue gas purification, provide a dust and mist removal device and an absorption tower. The dust and mist removal device comprises a dust and mist removal unit; wherein the dust and mist removal unit comprises: a cylinder comprising a flue gas passage; and a cyclone arranged in the flue gas passage and comprising a plurality of cyclone blades, at least one of the plurality of cyclone blades being connected to a barrier structure capable of blocking at least a portion of dusts and/or liquid droplets. The dust and mist removal device is capable of purifying flue gas and ensuring stability of purification efficiency.

## Description

### TECHNICAL FIELD

The present application relates to the technical field of flue gas purification, and in particular, relates to a dust and mist removal device and an absorption tower.

### BACKGROUND

At present, matured hollow-spraying-tower limestone wet desulfurization technique is universally used to treat the flue gas and industrial exhaust gas SO₂. Based on this technique, if some other effect-enhancing devices are added, an ideal treatment effect is achieved. After the flue gas is subjected to washing, purification and desulfurization by the hollow-wet-spraying-tower, tiny droplets generated during the spraying are carried, which fails to satisfy the exhaust standard. Therefore, a mist remover needs to be installed to remove the droplets.

However, in the prior art, regardless of whether a plate-type dust and mist remover or a ridge-type dust and mist remover, the dust and mist removal effect is not ideal, and the flue gas experiencing the conventional dust and mist remover generally has a dust exhaust concentration of about 10 mg/N.m3. In the prior art, a multi-stage cyclone pipe-type dust and mist remover having a high desulfurization efficiency is also provided, and with this remover, the treated flue gas has a dust exhaust concentration of less than or equal to 5 mg/N.m³. However, the operating efficiency of this pipe-type dust and mist remover is greatly affected by the load of the machine set. When the flue gas flows quickly in the machine set, since the flue gas has an increased capability to carry out dusts and liquid droplets, the dust and mist removal effect is poor, and thus the efficiency is not stabilized.

Another dust and mist removal manner is to additionally install a wet-type electrical dust removal device based on the mist remover of the wet-type desulfurization device to implement deep purification. This manner achieves an ideal purification effect. However, the wet-type electrical dust remover is large in size. If such a remover is built on the original desulfurization tower, the diameter and height of the absorption tower both need to be increased. As such, the reconstruction workload is great, a great load is added, and the base of the original absorption tower needs to be consolidated. If such a remover is built outside the tower, a large space is needed, and multiple direction changes of the flue gas passage increase the resistance. In addition, the difficulty in reconstruction based on the existing project is great, the initial investment is high, the maintenance workload is great, and the operational energy consumption is high.

### SUMMARY

In view of the above, the present application provides a dust and mist removal device and an absorption tower, to solve the problem that the flue gas treatment effect is poor in the prior art.

Embodiments of the present application provide a dust and mist removal device comprising a dust and mist removal unit; wherein the dust and mist removal unit comprises: a cylinder comprising a flue gas passage; and a cyclone arranged in the flue gas passage and comprising a plurality of cyclone blades, at least one of the plurality of cyclone blades being connected to a barrier structure capable of blocking at least a portion of dusts and/or liquid droplets.

Optionally, each of the plurality of cyclone blades comprises a blade upper edge and a blade lower edge, and the barrier structure is arranged on the blade upper edge of the cyclone blade.

Optionally, the barrier structure comprises a first barrier ridge, wherein the first barrier ridge is connected to the blade upper edge of the cyclone blade and extends underneath the blade upper edge.

Optionally, the barrier structure further comprises a second barrier ridge, wherein the second barrier ridge is connected to the blade upper edge of the cyclone blade via a connection section, and the second barrier ridge is located over the cyclone blade.

Optionally, each of the plurality of cyclone blades comprises a blade root portion and a blade end portion, wherein an included angle formed between at least one of the plurality of cyclone blades and a cross section of the cylinder gradually increases or decreases along a direction from the blade root portion to the blade end portion.

Optionally, the included angle formed between at least one of the plurality of cyclone blades and the cross section of the cylinder gradually increases along the direction from the blade root portion to the blade end portion.

Optionally, each of the plurality of cyclone blades comprises a blade upper edge and a blade lower edge, wherein an included angle formed between at least one of the plurality of cyclone blades and a cross section of the cylinder gradually increases or decreases along a direction from the blade upper edge and the blade lower edge.

Optionally, the cyclone further comprises a cyclone cove, wherein the cyclone blade is arranged within the cyclone shroud, and a blade end portion of the cyclone blade is connected to the cyclone shroud.

Optionally, the cyclone shroud is provided with a dust outlet opening, wherein the dust outlet opening passes through the cyclone shroud, and the dust outlet opening is corresponding arranged underneath the blade end portion of each of the plurality of cyclone blades.

Optionally, a gap is present between an outer wall face of the cyclone shroud and an inner wall face of the cylinder; and/or a connection rod is arranged on an outer wall of the cyclone shroud, and the cyclone shroud is connected to the cylinder via the connection rod.

Optionally, the cyclone further comprises a central cylinder, wherein a blade root portion of the cyclone blade is connected to the central cylinder.

Optionally, a plurality of dust and mist removal units are provided, and densely arranged along a radial direction of the cylinder; and/or a plurality of dust and mist removal units are provided, and sequentially connected along an axial direction of the cylinder.

Embodiments of the present application further provide an absorption tower. The absorption tower comprises a tower housing and a dust and mist removal device which is the above described dust and mist removal device.

As known from the above technical solutions, the cylinder of the dust and mist removal device according to the embodiments of the present application is configured to collect the dusts, and the flue gas passage therein is configured to passing through the flue gas. The cyclone is arranged in the flue gas passage, such that during flowing of the flue gas in the flue gas passage, vertical upward movement of the flue gas is changed to rotary upward movement through the cyclone, and under the effect of a centrifugal force, dust particles and small liquid droplets in the flue gas are thrown to an inner wall of the cylinder. In this way, the dusts and/or liquid droplets are separated from the flue gas, and thus the dust and mist removal function is implemented. The cyclone blade in the cyclone enables the flue gas to become a rotary gas flow when passing through the cyclone, and the barrier structure is configured to block dusts and liquid droplets in the flue gas from continuing flowing with the flue gas, such that dusts and mists are removed.

### BRIEF DESCRIPTION OF THE DRAWINGS

To describe technical solutions according to the embodiments of the present application or in the related art, drawings that are to be referred for description of the embodiments or the related art are briefly described hereinafter. Apparently, the drawings described hereinafter merely illustrate some embodiments of the present application. Persons of ordinary skill in the art may also derive other drawings based on the drawings described herein.
FIG. 1 is a schematic sectional structural diagram of an absorption tower according to an embodiment of the present application;
FIG. 2 is a schematic sectional structural diagram of a dust and mist removal unit a lower end of which is connected to a water receiving pipe according to an embodiment of the present application;
FIG. 3 is a schematic sectional structural diagram of a dust and mist removal unit an upper end of which is connected to a water receiving pipe according to an embodiment of the present application;
FIG. 4 is a schematic partially enlarged structural diagram of a dust and mist removal unit having a circular cylinder according to an embodiment of the present application;
FIG. 5 is a schematic partially enlarged structural diagram of a dust and mist removal unit having an equilateral hexagonal cylinder according to an embodiment of the present application;
FIG. 6 is a schematic transversal sectional structural diagram of a dust and mist removal unit having a circular cylinder and a circular cyclone shroud according to an embodiment of the present application;
FIG. 7 is a schematic transversal sectional structural diagram of a dust and mist removal unit having an equilateral hexagonal cylinder and an equilateral hexagonal cyclone shroud according to an embodiment of the present application;
FIG. 8 is a schematic transversal sectional structural diagram of a dust and mist removal unit having an equilateral hexagonal cylinder and a circular cyclone shroud according to an embodiment of the present application;
FIG. 9 is a schematic transversal sectional structural diagram of a cyclone having a circular cyclone shroud according to an embodiment of the present application;
FIG. 10 is a schematic transversal sectional structural diagram of a cyclone having an equilateral hexagonal cyclone shroud according to an embodiment of the present application;
FIG. 11 is a schematic semi-sectional structural diagram of a cyclone according to an embodiment of the present application;
FIG. 12 is a schematic three-dimensional structural diagram of the cyclone having a circular cyclone shroud according to an embodiment of the present application;
FIG. 13 is a schematic three-dimensional structural diagram of the cyclone having an equilateral hexagonal cyclone shroud according to an embodiment of the present application;
FIG. 14 is a schematic three-dimensional structural diagram of a plate-type cyclone blade according to an embodiment of the present application;
FIG. 15 is a schematic three-dimensional structural diagram of a cyclone blade having a first barrier ridge from a first view angle according to an embodiment of the present application;
FIG. 16 is a schematic three-dimensional structural diagram of the cyclone blade having a first barrier ridge from a second view angle according to an embodiment of the present application;
FIG. 17 is a schematic three-dimensional structural diagram of a cyclone blade having a second barrier ridge according to an embodiment of the present application;
FIG. 18 is a schematic three-dimensional structural diagram of a cyclone blade having a first barrier ridge and a second barrier ridge according to an embodiment of the present application;
FIG. 19 is a schematic longitudinal sectional structural diagram of a cyclone blade according to an embodiment of the present application; and
FIG. 20 is a schematic transversal sectional structural diagram of a cyclone blade according to an embodiment of the present application.

### Reference numerals and denotations thereof:

1 tower housing; 2 absorption tower flue gas inlet; 3 absorption tower flue gas outlet; 4 support frame; 5 dust and mist removal unit; 51 cylinder; 52 cyclone; 521 cyclone blade; 5211 blade root portion; 5212 blade end portion; 5213 blade upper edge; 5214 blade lower edge; 5215 first barrier ridge; 5216 second barrier ridge; 5217 connection section; 522 cyclone shroud; 5222 dust outlet opening; 523 connection rod; 524 central cylinder; 53 washing pipe; 54 washing nozzle; 6 primary washing pipe; 7 water receiving pipe; and 9 sealing device.

### DETAILED DESCRIPTION

Nevertheless, it is not necessary to require that any technical solution according to the embodiments of the present application achieves all of the above technical effects.

To make a person skilled in the art better understand the technical solutions of the embodiments of the present application, the technical solutions of the present application are clearly and completely described with reference to the accompanying drawings of the embodiments of the present application. Apparently, the described embodiments are only a part of the embodiments of the present application, rather than the entire embodiments. Based on the embodiments of the present application, all other embodiments derived by persons of ordinary skill in the art without any creative efforts shall fall within the protection scope of the present application.

Specific implementations of the embodiments of the present application are further described hereinafter with reference to the accompanying drawings of the present application.

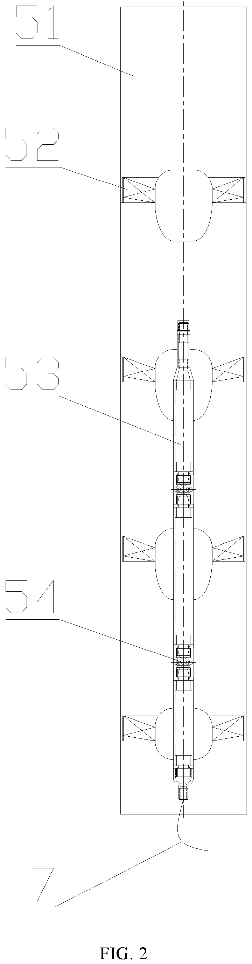

As illustrated in FIG. 2 to FIG. 20, according to the embodiments of the present application, the dust and mist removal device comprises a dust and mist removal unit 5, wherein the dust and mist removal unit 5 comprises a cylinder 51 and a cyclone 52. The cylinder 51 comprises a flue gas passage. The cyclone 52 is arranged in the flue gas passage, and the cyclone 52 comprises a plurality of cyclone blades 521, wherein at least one of the plurality of cyclone blades 521 is connected to a barrier structure capable of blocking at least a portion of dusts and/or liquid droplets.

The cylinder 51 is configured to collect dusts, and the flue gas passage therein is configured to pass flue gas. The cyclone 52 is arranged in the flue gas passage, such that during flowing of the flue gas in the flue gas passage, vertical upward movement of the flue gas is changed to rotary upward movement through the cyclone 52, and under the effect of a centrifugal force, dust particles and small liquid droplets in the flue gas are thrown to an inner wall of the cylinder 51. In this way, the dusts and/or liquid droplets are separated from the flue gas, and thus the dust and mist removal function is implemented. The cyclone blade 521 in the cyclone 52 enables the flue gas to become a rotary gas flow when passing through the cyclone 52, and the barrier structure is configured to block dusts and liquid droplets in the flue gas from continuing flowing with the flue gas, such that dusts and mists are removed. When the flue gas flows in the cylinder 51 and flows through the barrier structure, at least a portion of the dusts and/or liquid droplets may be blocked by the barrier structure to prevent the dusts and/or liquid droplets from continuing flowing.

The dusts and/or liquid droplets may be blocked as long as an included angle is formed between the barrier structure and the cyclone blade 521. The included angle herein refers to that an extension direction of the barrier structure is not parallel to a tangential line thereof at a connection position of the cyclone blade 521.

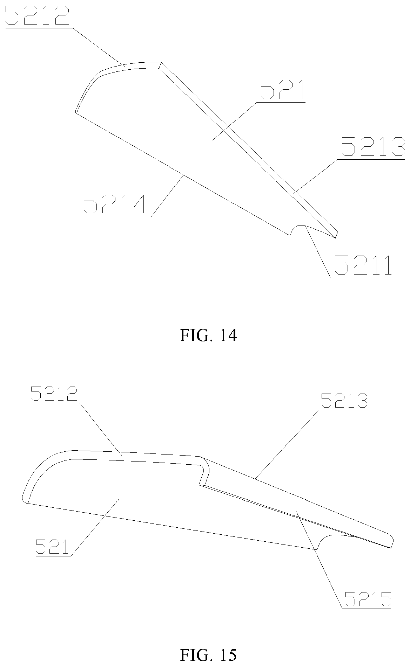

As illustrated in FIG. 15 to FIG. 18, each cyclone blade 521 comprises a blade upper edge 5213 and a blade lower edge 5214, and a barrier structure is arranged on the blade upper edge 5213 of at least one cyclone blade 521.

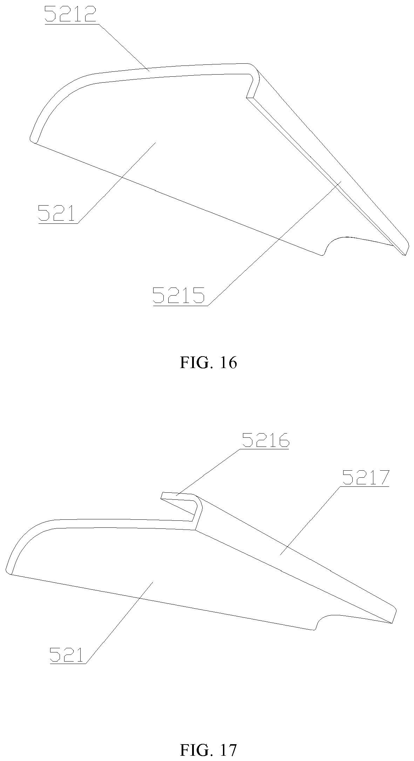

Optionally, as illustrated in FIG. 15 and FIG. 16, the barrier structure comprises a first barrier ridge 5215, wherein the first barrier ridge 5215 is connected to the blade upper edge 5213 of the cyclone blade 521 and extends underneath the blade upper edge 5213. As such, when the flue gas flows through the cyclone blade 521 having the first barrier ridge 5215, the flue gas is blocked by the first barrier ridge 5215 and the cyclone blade 521, and a portion of the dusts and/or liquid droplets move to the blade end portion 5212 along the surface of the cyclone blade 521 and arrive on an inner wall of the cylinder 51 via a dust outlet opening 5222 and is thus separated from the flue gas.

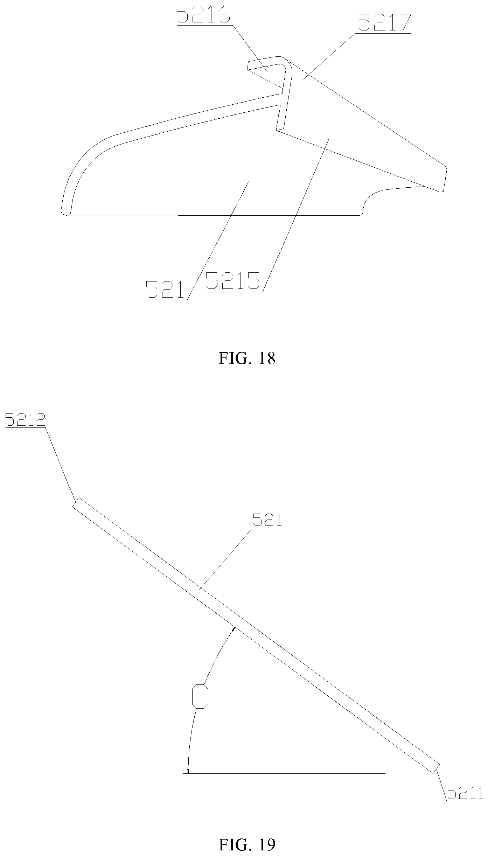

Optionally, as illustrated in FIG. 17, the barrier structure further comprises a second barrier ridge 5216, wherein the second barrier ridge 5216 is connected to the blade upper edge 5213 of the cyclone blade 521 via a connection section 5217, and the second barrier ridge 5216 is located over the cyclone blade 521. The second barrier ridge 5216 has a similar effect as the first barrier ridge 5215, and these two barrier ridges are both intended to block the dusts and liquid droplets in the flue gas from continuing moving and flowing. The cyclone blade 521 may be only provided with the first barrier ridge 5215 or may be only provided with the second barrier ridge 5216, or may be provided with both the first barrier ridge 5215 and the second barrier ridge 5216, as illustrated in FIG. 18.

When the dust and mist removal unit 5 comprises a plurality of cyclones 52, a barrier structure may be arranged on each cyclone blade 521 of one or more of the cyclones 52, and the cyclone blades of the remaining cyclones 52 are not provided with the barrier structure. Optionally, the cyclone blade 521 of the cyclone 52 close to the flue gas outlet is provided with a barrier structure because the dusts and liquid droplets carried in the flue gas close to the flue gas outlet are light-weighted and thus may easily move with the flue gas. In this way, the arranged barrier structure is capable of blocking these light-weighted dusts and liquid droplets from continuing moving, such that the dust and mist removal effect is enhanced. The number of cyclones 52 having a barrier structure may be defined according to the actual needs. For example, if it needs to be ensured that the flowing rate at the flue gas outlet when the dust and mist removal unit 5 operates satisfies a specific value, the number of cyclones 52 having a barrier structure may be adaptively reduced. This is because the barrier structure generates a resistance against flowing of the flue gas and thus reduces the flowing rate of the flue gas. If the flowing rate at the flue gas outlet does not need to be sufficiently high, to improve the dust and mist removal effect, the number of cyclones 52 having a barrier structure may be adaptively increased.

As illustrated in FIG. 2 to FIG. 4, in this embodiment, the dust and mist removal unit 5 further comprises a washing pipe 53, wherein the washing pipe 53 is arranged at the center of the cylinder 51 and coaxially arranged with the cylinder 51, and extends along an axial direction of the cylinder 51. With such arrangement, on the same cross section, the distances from the washing pipe 53 to all the positions on the inner wall of the cylinder 51 are equal or approximate, and the washing pipe 53 is capable of washing the inner wall of the cylinder 51 uniformly, such that the dusts, liquid droplets and the like attached on the inner wall of the cylinder 51 are removed from the inner wall. In this way, scaling on the inner wall of the cylinder 51 may be completely prevented.

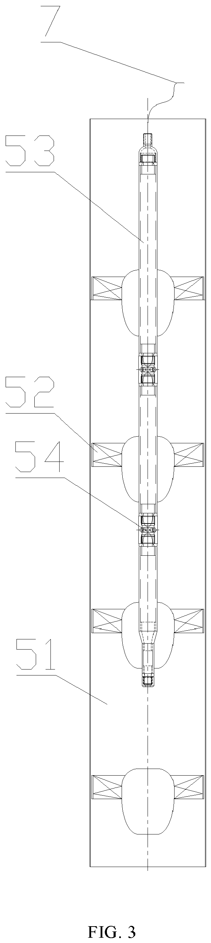

As illustrated in FIG. 2, the washing pipe 53 may be connected to an external water source via a water receiving pipe 7 connected to a lower end of the dust and mist removal unit. The length of the washing pipe 53 may be equal to or less than the length of the cylinder 51. As illustrated in FIG. 3, the washing pipe 53 may be connected to an external water source via a water receiving pipe 7 connected to an upper end of the dust and mist removal unit.

Optionally, in this embodiment, the dust and mist removal unit 5 further comprises at least one washing nozzle 54, wherein the washing nozzle 54 is arranged on the washing pipe 53. The washing pipe 53 injects water and washes the inner wall of the cylinder 51 by means of the washing nozzle 54. The washing nozzle 54 may inject water in multiple directions, to ensure the washing effect. Nevertheless, in another embodiment, the washing nozzle 54 may not be arranged, and instead, holes are directly opened on the washing pipe 53 to inject water. The washing nozzle 54 may have any suitable structure, as long as the water may be injected to wash the cylinder 51.

Optionally, a plurality of washing nozzles 54 may be provided, and are spacedly arranged sequentially along a length direction (an axial direction of the cylinder 51) of the washing pipe 53, to ensure that the cylinder 51 is thoroughly washed. The specific number of washing nozzles 54, the spacing between two adjacent washing nozzles 54, the arrangement of the washing nozzles 54 and the like may be determined according to the actual needs. For example, the washing nozzles 54 may be arranged on the washing pipe 53 at an equal spacing, or may be arranged at a smaller spacing at the positions where the dusts and liquid droplets are densely distributed according to aggregation of the dusts and liquid droplets on the cylinder 51.

In this embodiment, a plurality of cyclones 52 may be provided, and arranged sequentially and spacedly along the axial direction of the cylinder 51. Optionally, the plurality of cyclones 52 may be concentrically arranged in series. The washing pipe 53 passes through at least one cyclone 52. For example, as illustrated in FIG. 2 and FIG. 3, the washing pipe 53 passes through the plurality of cyclones 52.

The washing nozzle 54 may be arranged over and underneath the closest cyclone 52.

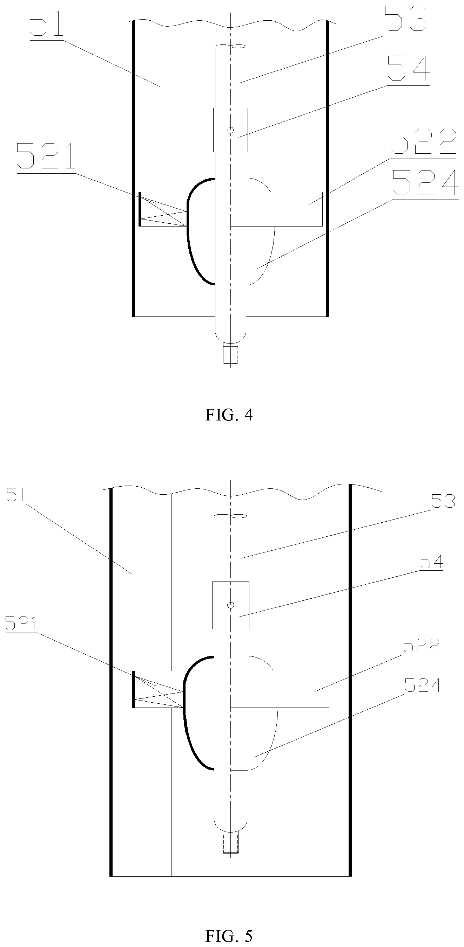

As illustrated in FIG. 4 to FIG. 10, a cross section of the cylinder 51 may be a circle, an ellipse, a polygon or the like. Optionally, when the cross section of the cylinder 51 is a polygon, the polygon may be an equilateral polygon, for example, an equilateral hexagon. When a plurality of cylinders 51 are densely arranged, the equilateral hexagon cylinders 51 may be arranged in a cellular structure, to prevent the flue gas from passing through a gap between two cylinders 51 and hence ensure the flue gas treatment effect. The cylinder 51 is provided with a flue gas inlet and a flue gas outlet that are in connection with the flue gas passage, wherein the specific positions of the flue gas inlet and the flue gas outlet may be determined according to the actual needs. For example, the flue gas inlet and the flue gas outlet may be arranged on an upper end and a lower end of the cylinder 51, or may be arranged on a side wall of the cylinder 51. In this embodiment, the flue gas inlet is arranged on a bottom wall of the cylinder 51, and the flue gas outlet is arranged on a top wall of the cylinder 51, that is, as illustrated in FIG. 2, the flue gas flows from bottom to top.

The cyclone 52 further comprises a cylinder shroud 522, a connection rod 523 and a central cylinder 524 in addition to the cyclone blade 521. Nevertheless, in another embodiment, the cyclone 52 may only comprise a cyclone blade 521, wherein the cyclone blade 521 further comprises a blade root portion 5211 and a blade end portion 5212 in addition to the blade upper edge 5213 and the blade lower edge 5214. The blade root portion 5211 of the cyclone blade 521 is directly connected to the washing pipe 53, and the blade end portion 5212 is directly connected to the inner wall of the cylinder 51.

In this embodiment, the central cylinder 524 is connected to the washing pipe 53. As illustrated in FIG. 4 and FIG. 5, the washing pipe 53 passes through the central cylinder 524. The blade root portion 5211 of the cyclone blade 521 is connected to an outer wall of the central cylinder 524.

Optionally, the central cylinder 524 has an ellipsoidal structure, wherein an outer surface thereof is an arc surface. In this way, the gas flow may be effectively guided, such that the dusts and liquid droplets in the flue gas may more easily move to the cylinder 51 and aggregate to form larger particles, thereby implementing the dust and mist removal function. In addition, a profile of the cylinder 524 is a smooth arc surface, such that the gas flow reversal is smoother and the resistance is reduced.

Optionally, a cross section area of the central cylinder 524 is the maximum at the position corresponding to the cyclone blade 521, and gradually decreases along a direction in which the central cylinder 524 gradually approaches the end portion of the cyclone blade 521. That is, along a flue gas flow direction, the cross section area of the central cylinder 524 gradually increases and then gradually decreases. The central cylinder 524 is a central blind cylinder, and is formed by a central cylinder section, an upper semi-ellipsoid plug and a lower semi-ellipsoid plug.

Nevertheless, in another embodiment, the central cylinder 524 may have a cylindrical structure or any other structure.

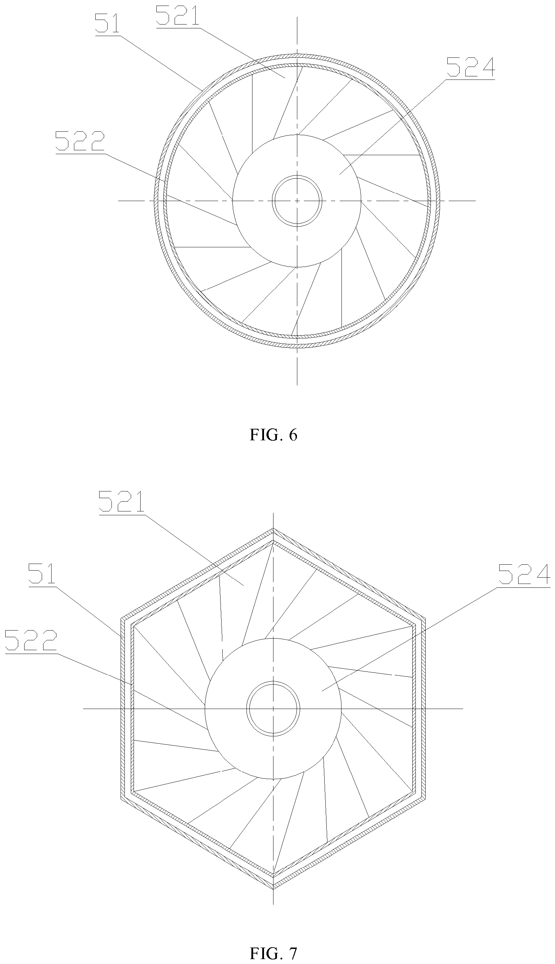

As illustrated in FIG. 6 to FIG. 10, each cyclone 52 comprises a plurality of cyclone blades 521, wherein the cyclone blade 521 is connected to the central cylinder 524 via the blade root portion 5211. In addition, the plurality of cyclone blades 521 are sequentially arranged along a circumference of the central cylinder 524. A gap may be present between the blade root portions 5211 of two adjacent cyclone blades 521, or no gap is arranged therebetween. The number of cyclone blades 521 may be greater than or equal to 12, and less than or equal to 18. These cyclone blades 521 may be arranged in a circular array with the center of the central cylinder 524 as a center point.

In this embodiment, the blade end portion 5212 of the cyclone blade 521 is connected to the cyclone shroud 522, and the cyclone shroud 522 may cooperate with the central cylinder 524 to limit two ends of the cyclone blade 521, thereby improving stability of the cyclone blade 521 and preventing the cyclone blade 521 from causing vibration noise under shock of the flue gas.

The shape of the cross section of the cyclone shroud 522 may be the same or similar to that of the cylinder 51. For example, as illustrated in FIG. 6 and FIG. 7, the shape of the cross section of the cyclone shroud 522 may be the same as that of the cylinder 51, and when the cross section of the cylinder 51 is a circle, the cross section of the cyclone shroud 522 is also a circle, and the two circles are concentric. When the cross section of the cylinder 51 is an equilateral hexagon, the cross section of the cyclone shroud 522 may also be an equilateral hexagon, and the two equilateral hexagons are concentric.

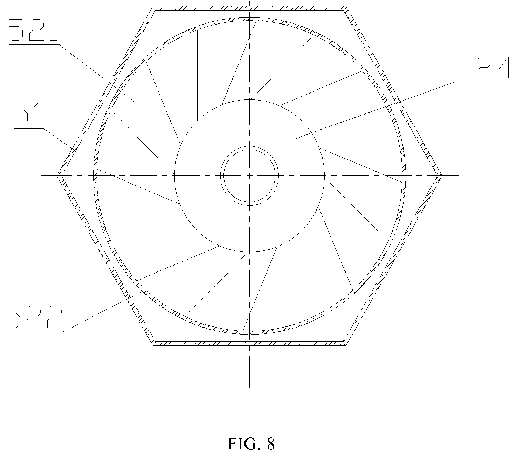

Nevertheless, the shape of the cross section of the cyclone shroud 522 may also be different from that of the cylinder 51. As illustrated in FIG. 8, when the cross section of the cylinder 51 is an equilateral hexagon, the cross section of the cyclone shroud 522 may be a circle.

In this embodiment, a gap is present between the outer wall of the cyclone shroud 522 and the inner wall of the cylinder 51, wherein this gap is a falling passage through which the dusts, liquid droplets or the like fall. The size of the gap may be determined according to the actual needs. However, the gap shall not be excessively large or small. A too excessively large gap may affect the flue gas treatment effect, and an excessively small gap may affect falling of the dusts, liquid droplets or particles.

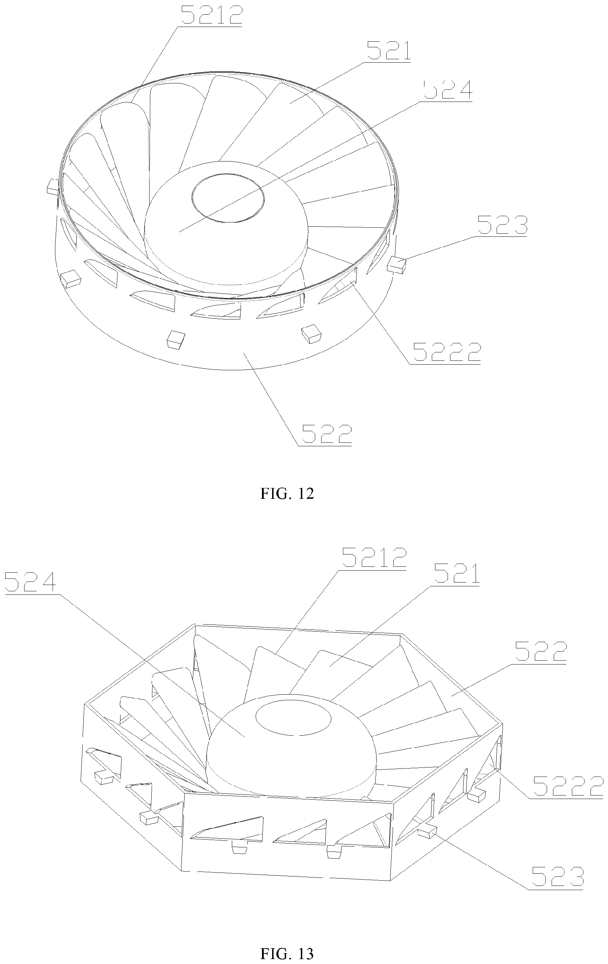

As illustrated in FIG. 12 and FIG. 13, optionally, a dust outlet opening 5222 is arranged on the cyclone shroud 522, wherein the dust outlet opening 5222 passes through the cyclone shroud 522, and via the dust outlet opening 5222, the dusts, liquid droplets and the like in the flue gas pass through the cyclone shroud 522 and finally reaches the inner wall of the cylinder 51.

In this embodiment, the blade end portion 5212 of each cyclone blade 521 is correspondingly provided with a dust outlet opening 5222, to ensure the dust and mist removal effect.

Optionally, a connection rod 523 is arranged on the outer wall of the cyclone shroud 522, wherein the cyclone shroud 522 is connected to the cylinder 51 via the connection rod 523. More connection rods 523 may be provided, and are arranged uniformly and spacedly arranged along the outer wall of the cyclone shroud 522, so as to provide a reliable and stable support for the cyclone shroud 522. The connection rod 523 may be a circular rod, a rectangular rod, a block, a plate or the like structure as long as the cyclone shroud 522 is connected to the cylinder 51 via the connection rod 523.

As illustrated in FIG. 14 to FIG. 20, in this embodiment, the cyclone blade of the cyclone 52 is a novel cyclone blade. The cyclone blade has angles of different directions (hereinafter the structure of the cyclone blade 521 is described in detail), and a barrier ridge configured to block liquid droplets and dusts from flowing with the flue gas may be provided on the blade upper edge 5213, such that the liquid droplets and dusts are separated from the flue gas and then guided to the inner wall of the cylinder 51, and finally fall along the inner wall of the cylinder 51 and removed.

Specifically, the angles of different directions of the cyclone blade 521 mean that:
The included angle formed between at least one of the plurality of cyclone blades 521 and the cross section of the cylinder 51 gradually increases or decreases along the direction from the blade root portion 5211 to the blade end portion 5212. The included angle formed between the cyclone blade 521 and the cross section of the cylinder 51 gradually increases or decreases along the direction from the blade root portion 5211 to the blade end portion 5212, such that the profile of the cyclone blade 521 is a variable profile surface and is capable of guiding flow of the passed flue gas. In this way, the dusts and liquid droplets more easily aggregate and thus are more easily removed from the flue gas.

In other words, along the direction from the blade root portion 5211 to the blade end portion 5212, an included angle c formed between the cyclone blade 521 and the horizontal plane gradually varies, that is, gradually increasing or decreasing. Optionally, the included angle formed between cyclone blade 521 and the cross section of the cylinder 51 gradually increases along the direction from the blade root portion 5211 to the blade end portion 5212. In this way, the dusts and liquid droplets more easily aggregate on the inner wall of the cylinder 51, such that the dust and mist removal effect and efficiency are ensured. It should be noted that, in this embodiment, the cross section of the cylinder 51 coincides with the horizontal plane. When a cyclone 52 comprises a plurality of cyclone blades 521, it is not necessary that the included angles c formed between all the cyclone blades 521 and the horizontal plane are variable along the direction from the blade root portion 5211 to the blade end portion 5212. The cyclone blade 521 has a specific inclined angle, and the included angle formed between the cyclone blade 521 and the horizontal plane is variable along the direction from the blade root portion 5211 to the blade end portion 5212.

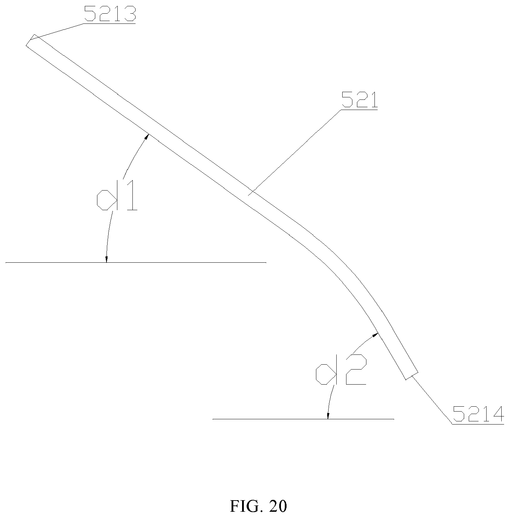

Optionally, the included angle formed between at least one of the plurality of cyclone blades 521 and the cross section of the cylinder 51 gradually increases or decreases along the direction from the blade upper edge 5213 to the blade lower edge 5214. That is, the included angle formed between the cyclone blade 521 and the horizontal plane is also gradually variable along the direction from the blade upper edge 5213 to the blade lower edge 5214. As illustrated in FIG. 20, an included angle d1 formed between a portion of the cyclone blade 521 closer to the upper edge thereof and the horizontal plane is less than an included angle d2 formed between a portion of the cyclone blade 521 closer to the lower end thereof and the horizontal plane.

The included angle d1 is within the range of 24° ≤ d1 ≤ 90°. The included angle d2 is within the range of 24° ≤ d2 ≤ 45°.

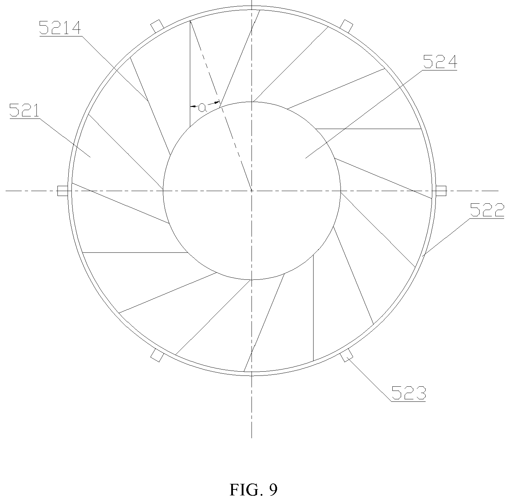

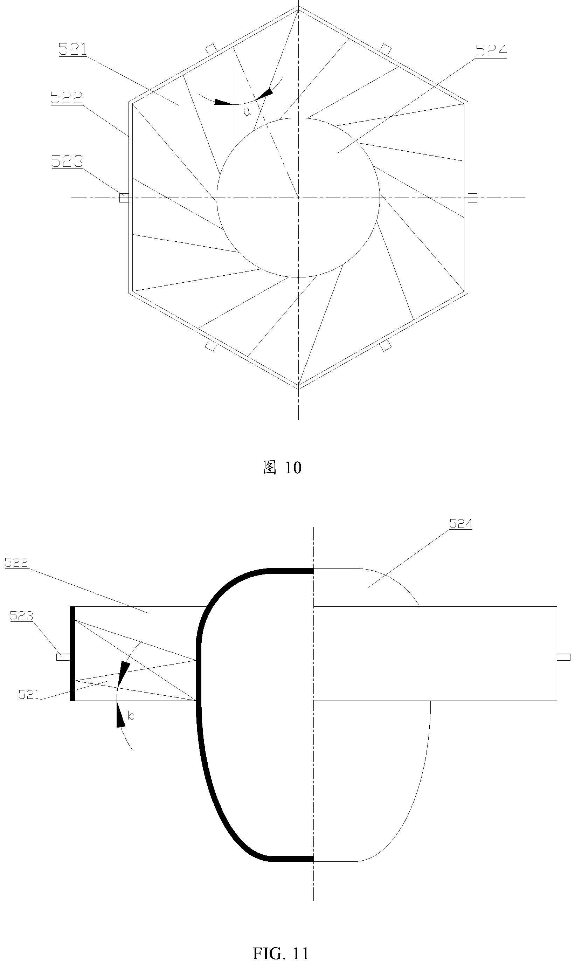

As illustrated in FIG. 9 and FIG. 10, an orthographic projection (a horizontal projection, that is, a projection of the cyclone blade 521 in the horizontal plane) of the blade lower edge 5214 of the cyclone blade 521 of the cyclone 52 forms an included angle a with a first reference line. The first reference line refers to a connection line between the center of the cyclone shroud 522 and the end (a point at which the blade lower edge 5214 intersects with the inner wall of the cyclone shroud 522 is intersected) of the orthographic projection of the blade lower edge 5214.

It should be noted that, when the cyclone 52 comprises a plurality of cyclone blades 521, the included angles a of these cyclone blades 521 may be the same or may be different. In this embodiment, a centrifugal angle (included angle a) between a lower edge line of the planar projection of the cyclone blade 521 (in this embodiment, the orthographic projection line of the blade lower edge of one cyclone blade 521 coincides with the orthographic projection line of the blade upper edge of an adjacent cyclone blade 521) and a connection line between the end of the edge line and the center of the central cylinder is within the range of 15° ≤ a ≤ 30°, such that the liquid droplets and dusts acquire a greater centrifugal force while rotating with the flue gas along the cyclone blade 521, and thus more easily move to the cylinder 51.

As illustrated in FIG. 11, an included angle b is formed between the blade lower edge 5214 of the cyclone blade 521 and the horizontal plane. In this way, the dusts, liquid droplets and the like may be well guided to the wall surface of the cylinder 51. An included angle formed between an edge line of the blade lower edge 5214 of the cyclone 521 and the horizontal plane is within the range of 0° to 30°, such that the liquid droplets and dusts more easily move to the blade end portion 5212 of the cyclone blade 521 when rising with the flue gas, such that the liquid droplets and dusts more easily arrive on the inner wall of the cylinder 51.

It should be noted that, when the cyclone 52 comprises a plurality of cyclone blades 521, the included angles b of cyclone blades 521 are not necessarily the same, as long as the included angle b is within a specified value range.

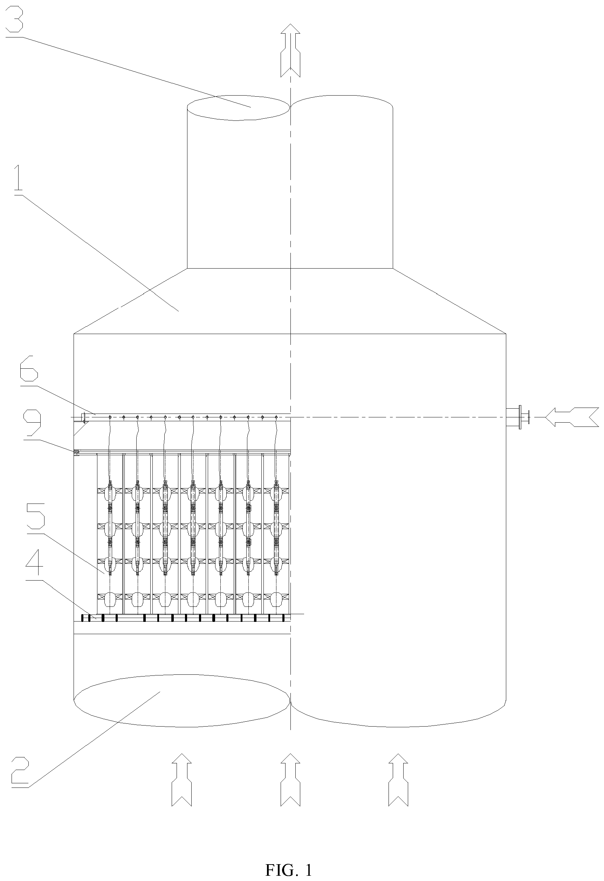

As illustrated in FIG. 1, according to another aspect of the present application, an absorption tower is provided. The absorption tower comprises a tower housing 1 and a dust and mist removal device which is the above described dust and mist removal device. The absorption tower employs a dust and mist removal device having cyclone blades in multiple angles, such that the flue gas treatment effect is better, the load adaptability is stronger. In this way, a better flue gas treatment effect is achieved.

Optionally, an absorption tower flue gas inlet 2 is arranged at a bottom of the tower housing 1, and an absorption tower flue gas outlet 3 is arranged at a top of the tower housing 1. Along a flow direction of the flue gas, the tower housing 1 is sequentially provided with a support frame 4, a dust and mist removal device, a water receiving pipe 7, and a primary washing pipe 6.

The support frame 4 is fixedly connected to the tower housing 1, and is configured to support the dust and mist removal device. The dust and mist removal device comprises a plurality of dust and mist removal units 5, and the plurality of dust and mist removal units 5 are densely arranged along a radial direction of the cylinder 51. The support frame 4 may seal the gap between the dust and mist removal units 5, such that the flue gas inevitably passes through the flue gas passage of the dust and mist removal units 5. In this way, the flue gas treatment effect is ensured.

Optionally, the dust and mist removal units 5 may also be sequentially connected along an axial direction of a cylinder 51. In this way, the treatment route of the flue gas may be prolonged, and the treatment effect may be ensured.

The water receiving pipe 7 is configured to connect the primary washing pipe 6 and a washing pipe 53 of each dust and mist removal unit 5 so as to provide water for the washing pipe 53. The water receiving pipe 7 may be a soft pipe. The primary washing pipe 6 is connected to an external washing water system, and intermittently washes each dust and mist removal unit 5 by means of program-based control.

In a novel multi-stage cyclone pipe-type dust and mist remover, an upper end thereof is provided with a sealing device 9 which is configured to prevent the flue gas from escaping from a gap between the dust and mist removal units and between the dust and mist removal unit and a wall of the absorption tower without dust and mist removal.

The absorption tower operates as follows:
The flue gas experiencing desulfurization spray-washing passes through the multi-stage cyclone pipe-type dust and mist removal device from bottom to top, when the gas flow passes through the cyclone therein, the gas flow is changed into a rotary gas flow, under the effect of a centrifugal force, the dusts, liquid droplets and the like in the flue gas are thrown onto the inner wall of the cylinder 51 to form a liquid membrane and are aggregated to greater particles (including the liquid droplets, dusts and the like), and under the effect of gravity, the particles fall, such that the dusts and liquid droplets are removed and the clean exhaust standard is satisfied.

A plurality of dust and mist removal units 5 may be parallelly arranged to form the novel multi-stage cyclone pipe-type dust and mist removal device according to the flue gas amount to be treated.

The dust and mist removal device and absorption tower according to the present application achieves the following technical effects:
The cyclone blades of the cyclone are changed such that the cyclone blades support a plurality of angles. In this way, the liquid droplets and dusts more easily acquire a centrifugal force, and move to the cylinder for collecting the dusts.

A barrier ridge for blocking the liquid droplets and dusts from flowing with the flue gas is arranged on a lower side and/or an upper side of the blade upper edge, such that the liquid droplets and dusts are separated from the flue gas before leaving the cyclone blades, and guided to the inner wall of the cylinder and hence fall along the inner wall of the cylinder. As such, the liquid droplets and dusts are removed.

A dust outlet opening is arranged between the cyclone blades on the cyclone shroud, such that the liquid droplets and dusts aggregated on the cyclone blades more easily pass through the cyclone shroud and arrive on the inner wall of the cylinder.

The multi-stage cyclone pipe-type dust and mist removal device requires a small installation space and light load, which is equivalent to a conventional dust and mist remover and may be installed without increasing the diameter of the absorption tower or the load. However, the dust and mist removal efficiency is much higher than that of the conventional dust and mist removal. This may ensure that the dust exhaust at the outlet is less than or equal to 5 mg/N.m3, and implement super clean exhaust. The novel multi-stage cyclone pipe-type dust and mist removal device may be designed and manufactured based on standards, and installed based on modularization, and has the advantages of low investment, low operating cost, simple maintenance and high reliability.

The above described device embodiments are merely for illustration purpose only. The modules which are described as separate components may be physically separated or may be not physically separated, and the components which are illustrated as modules may be or may not be physical modules, that is, the components may be located in the same position or may be distributed into a plurality of network modules. A part or all of the modules may be selected according to the actual needs to achieve the objectives of the technical solutions of the embodiments. Persons of ordinary skill in the art may understand and implement the present application without paying any creative effort.

Finally, it should be noted that the above embodiments are merely intended to describe the technical solutions of the embodiments of the present application, instead of limiting the present application. Although the present application is described in detail with reference to the above embodiments, persons of ordinary skill in the art should understand that various modifications may be made to the technical solutions described in the above embodiments or equivalent replacements may be made to some technical features thereof, without departing from the spirit and scope of the technical solutions of the embodiments of the present application.

## Claims

1. A dust and mist removal device, comprising a dust and mist removal unit (5), wherein the dust and mist removal unit (5) comprises:
a cylinder (51), the cylinder (51) comprising a flue gas passage; and
a cyclone (52), the cyclone (52) being arranged in the flue gas passage, the cyclone (52) comprising a plurality of cyclone blades (521), at least one of the plurality of cyclone blades (521) being connected to a barrier structure capable of blocking at least a portion of dusts and/or liquid droplets.

2. The dust and mist removal device according to claim 1, wherein each of the plurality of cyclone blades (521) comprises a blade upper edge (5213) and a blade lower edge (5214), and the barrier structure is arranged on the blade upper edge (5213) of the cyclone blade (521).

3. The dust and mist removal device according to claim 1, wherein the barrier structure comprises a first barrier ridge (5215), the first barrier ridge (5215) being connected to the blade upper edge (5213) of the cyclone blade (521) and extending underneath the blade upper edge (5213).

4. The dust and mist removal device according to any one of claims 1 to 3, wherein the barrier structure further comprises a second barrier ridge (5216), the second barrier ridge (5216) being connected to the blade upper edge (5213) of the cyclone blade (521) via a connection section (5217), and the second barrier ridge (5216) being located over the cyclone blade (521).

5. The dust and mist removal device according to claim 1, wherein each of the plurality of cyclone blades (521) comprises a blade root portion (5211) and a blade end portion (5212), wherein an included angle formed between at least one of the plurality of cyclone blades (521) and a cross section of the cylinder (51) gradually increases or decreases along a direction from the blade root portion (5211) to the blade end portion (5212).

6. The dust and mist removal device according to claim 5, wherein the included angle formed between at least one of the plurality of cyclone blades (521) and the cross section of the cylinder (51) gradually increases along the direction from the blade root portion (5211) to the blade end portion (5212).

7. The dust and mist removal device according to claim 1 or 5, wherein each of the plurality of cyclone blades (521) comprises a blade upper edge (5213) and a blade lower edge (5214), wherein an included angle formed between at least one of the plurality of cyclone blades (521) and a cross section of the cylinder (51) gradually increases or decreases along a direction from the blade upper edge (5213) to the blade lower edge (5214).

8. The dust and mist removal device according to claim 1, wherein the cyclone (52) further comprises a cyclone shroud (522), wherein the cyclone blade (521) is arranged within the cyclone shroud (522), and a blade end portion (5212) of the cyclone blade (521) is connected to the cyclone shroud (522).

9. The dust and mist removal device according to claim 8, wherein the cyclone shroud (522) is provided with a dust outlet opening (5222), wherein the dust outlet opening (5222) passes through the cyclone shroud (522), and the dust outlet opening (5222) is corresponding arranged underneath the blade end portion (5212) of each of the plurality of cyclone blades (521).

10. The dust and mist removal device according to claim 8, wherein a gap is present between an outer wall face of the cyclone shroud (522) and an inner wall face of the cylinder (51); and/or
a connection rod (523) is arranged on an outer wall of the cyclone shroud (522), and the cyclone shroud (522) is connected to the cylinder (51) via the connection rod (523).

11. The dust and mist removal device according to claim 8, wherein the cyclone (52) further comprises a central cylinder (524), a blade root portion (5211) of the cyclone blade (521) being connected to the central cylinder (524).

12. The dust and mist removal device according to claim 1, wherein a plurality of dust and mist removal units (5) are provided, and densely arranged along a radial direction of the cylinder (51); and/or a plurality of dust and mist removal units (5) are provided, and sequentially connected along an axial direction of the cylinder (51).

13. An absorption tower, comprising a tower housing (1) and a dust and mist removal device, wherein the dust and mist removal device is the dust and mist removal device as defined in any one of claims 1 to 12.
